## Europäisches Patentamt

(19) **European Patent Office**

**Office européen des brevets**

(11) Veröffentlichungsnummer: **0 009 745**
**B1**

(12) # EUROPÄISCHE PATENTSCHRIFT

(45) Veröffentlichungstag der Patentschrift:
**12.01.83**

(51) Int. Cl.³: **C 14 C 11/00**

(21) Anmeldenummer: **79103592.6**

(22) Anmeldetag: **24.09.79**

(54) **Verwendung von Dispersionen von Polymeren aus konjugierten Dienen, Allylsulfonsäuren und Acrylsäurederivaten zur Behandlung von Leder.**

(30) Priorität: **06.10.78 DE 2843780**

(43) Veröffentlichungstag der Anmeldung:
**16.04.80 Patentblatt 80/8**

(45) Bekanntmachung des Hinweises auf die Patenterteilung:
**12.01.83 Patentblatt 83/2**

(84) Benannte Vertragsstaaten:
**AT BE CH DE FR GB IT NL SE**

(56) Entgegenhaltungen:
**DE-C-821 997**
**FR-A-1 514 924**
**FR-A-2 263 287**

(73) Patentinhaber: **BAYER AG, Zentralbereich Patente, Marken und Lizenzen, D-5090 Leverkusen 1, Bayerwerk (DE)**

(72) Erfinder: **Heins, Ferdinand, Dr., Adalbert-Stifter-Strasse 49, D-4006 Erkrath 1 (DE)**
Erfinder: **Spelcher, Wolfgang, Dr., Walter-Flex-Strasse 5, D-5090 Leverkusen 1 (DE)**

Verwendung von Dispersionen von Polymeren aus konjugierten Dienen, Allylsulfonsäuren und
Acrylsäurederivaten zur Behandlung von Leder.

Die vorliegende Anmeldung betrifft die Verwendung wässriger Dispersionen von Polymeren, die aus acyclischen konjugierten Dienen, (Meth)acrylnitril sowie (Meth)acrylsäurealkylestern, deren Estergruppen mindestens teilweise Hydroxylgruppen tragen, aufgebaut und durch Copolymerisation von (Meth)allylsulfonsäure bzw. deren wasserlöslichen Salzen stabilisiert sind, zur Behandlung von Leder.

Es ist bekannt, dass die Stabilität von Nitrilkautschuk-Dispersionen aus einem oder mehreren acyclischen konjugierten Dienen und (Meth) acrylnitril durch zusätzlichen Einbau von monoethylenisch ungesättigten Carbonsäuren, beispielsweise Acrylsäure, Methacrylsäure oder Itaconsäure, erhöht werden kann, doch weisen derartige Latices oftmals eine Reihe von Nachteilen auf. Carboxylierte Nitrilkautschukdispersionen zeigen meist erst oberhalb pH 7 eine ausreichende mechanische Stabilität, unterhalb pH7 dagegen oft keine ausreichende Stabilität gegen Scherbeanspruchung wie sie bei der Imprägnierung und Grundierung von Leder durch Spritz-, Plüsch- oder Giessauftrag auftreten sowie eine zu starke Empfindlichkeit gegen Elektrolyte und Pigmentzusätze. Nachfolgende Zurichtprozesse machen jedoch häufig eine Verarbeitung solcher Latices im neutralen oder sauren Milieu erforderlich, da Polymerfilme aus alkalischen Latices beim Einsatz in der Imprägnierung und Grundierung von Ledern oftmals zu einer Vergilbung oder Verbräunung von Nitrocellulose enthaltenden Zwischenschichten führen. Diese Vergilbung ist insbesondere in der Lederzurichtung bei der Einstellung heller Farbtöne sehr nachteilig.

Es ist bekannt, dass man durch Verwendung von copolymerisierbaren Sulfonsäuren bzw. deren wasserlöslichen Salzen wesentlich stabilere Latices erhält als bei Verwendung von Carboxylgruppen tragenden Monomeren, da die Sulfonsäuregruppen auch im sauren bis neutralen Milieu stark dissoziieren und für eine ausreichende Ladung auf der Teilchenoberfläche sorgen, so dass die entsprechenden Latices im sauren und neutralen Milieu eine höhere Stabilität aufweisen.

Es ist ferner bekannt, dass man zur Erhöhung der Quellfestigkeit, Lösungsmittelechtheit und zur Erzielung eines klebfreien, trockenen Griffs Lederbinder auf der Basis eines oder mehrerer (Meth)acrylsäureester und (Meth)acrylnitril verwendet. Als besonders vorteilhaft erweist es sich dabei, die (Meth)acrylsäureester ganz oder teilweise durch ein acyclisches konjugiertes Dien mit 4 bis 9 Kohlenstoffatomen, insbesondere durch Butadien-(1,3), zu ersetzen, da man auf diese Weise Polymerdispersionen erhält, welche Filme mit herabgesetzter Einfriertemperatur und somit ein Leder ergeben, das nach der Imprägnierung oder Grundierung eine wesentlich verbesserte Kältebruchfestigkeit besitzt.

Nach FR-A-2 263 287 werden Polymere aus einem acyclischen Dien mit 4 C-Atomen, Acrylnitril, einem wasserlöslichen Salz der Methallylsulfonsäure, einem Acryl-und/oder Methacrylsäurehydroxyalkylester mit 2 oder 4 C-Atomen im Alkylrest und Acryl- oder Methacrylsäure als Lacke für Substrate verwendet, die dem Härtungsprozess der Lackhärtung widerstehen müssen. Eine Übertragung dieser Lehre auf Leder, das unter den in der FR-A genannten Bedingungen zerstört würde, ist daher nicht möglich.

Es wurde nun gefunden, dass man besonders vorteilhafte Imprägnierungen und Grundierungen von Ledern erhält, wenn man als wässrige Bindemittel Dispersionen verwendet mit einem pH-Wert zwischen 2 und 7 und Teilchendurchmessern zwischen 20 und 150 nm von Copolymerisaten mit einem $T\lambda_{max}$-Wert unter 20 °C aus einem oder mehreren acyclischen konjugierten Dienen, (Meth)acrylnitril und einem oder mehreren (Meth)acrylsäurealkylestern deren Erstergruppen mindestens teilweise eine Hydroxylgruppe tragen sowie (Meth)allylsulfonsäure und/oder deren wasserlöslichen Salzen. Latices mit dieser Monomerenkombination besitzen eine wesentlich erhöhte mechanische Stabilität; daraus hergestellte Polymerfilme weisen eine stärkere Haftung und insbesondere eine verbesserte Vergilbungsstabilität auf. Durch die Mitverwendung von (Meth)acrylsäurehydroxyalkylestern erhält man ausserdem ein Polymerisat mit funktionellen Gruppen, welche mit Co-Vernetzern reagieren, beispielsweise mit di- und polyfunktionellen Methylolverbindungen, Di- und Polyepoxiden sowie Di- und Polyisocyanaten, und auf diese Weise zu verbesserten Echtheiten, insbesondere im nassen Zustand, führen.

Gegenstand der Erfindung ist somit die Verwendung wässriger Dispersionen mit einem pH-Wert zwischen 2 und 7 und Teilchendurchmessern zwischen 20 und 150 nm von Polymeren mit einem $T\lambda_{max}$-Wert unter 20 °C aus

A) 20 bis 70 Gew.-Teilen eines oder mehrerer acyclischer konjugierter Diene mit 4 bis 9 Kohlenstoffatomen,

B) 10 bis 40 Gew.-Teilen Acrylnitril und/oder Methacrylnitril,

C) 1 bis 5 Gew.-Teilen Allylsulfonsäure und/oder Methallylsulfonsäure oder deren wasserlöslichen Salzen,

D) 5 bis 15 Gew.-Teilen Acrylsäure- und/oder Methacrylsäurehydroxyalkylestern mit 2 bis 4 Kohlenstoffatomen im Hydroxyalkylrest und

E) 0 bis 40 Gew.-Teilen Acrylsäure- und/oder Methacrylsäurealkylestern mit bis zu 8 Kohlenstoffatomen im Alkylrest,

wobei bis zu 20 Gew.-Teile der Monomere A, B, D und E durch andere copolymerisierbare Monomere ersetzt sein können, zur Behandlung von Leder.

Geeignete acyclische konjugierte Diene mit 4 bis 9 Kohlenstoffatomen sind z.B. Butadien-(1,3), 2-Methyl-butadien-(1,3) (Isopren), 2,3-Dimethylbutadien-(1,3), Piperylen, 2-Neopentylbutadien-(1,3) und andere substituierte Diene wie beispielsweise 2-Chlor-butadien-(1,3) (Chloropren), 2-Cyano-butadien-(1,3) sowie substituierte geradkettige konjugierte Pentadiene und geradkettige oder verzweigte Hexadiene. Die Fähigkeit, mit (Meth)acrylnitril besonders gut zu copolymerisieren, machen Butadien-(1,3) zum bevorzugten Monomer.

Geeignete Hydroxyalkylester sind z.B. Monoester aus Acryl- und/oder Methacrylsäure und zweiwertigen gesättigten aliphatischen Alkoholen mit 2 bis 4 Kohlenstoffatomen wie Ethylenglykol, Propandiol-(1,2) und Butandiol-(1,2).

Als (Meth)acrylsäurealkylester seien beispielsweise genannt: Methyl-, Ethyl-, n-Propyl-, Isopropyl-, n-Butyl-, Isobutyl- und 2-Ethylhexyl-(meth)acrylat.

Weitere copolymerisierbare Monomere sind insbesondere $\alpha,\beta$-monoethylenisch ungesättigte Mono- und Dicarbonsäuren wie Acrylsäure, Methacrylsäure, Itacon-, Fumar- und Maleinsäure, Monoester dieser Dicarbonsäuren wie z.B. Monoalkylitaconat, -fumarat und -maleat, Diester aus Alkandiolen und $\alpha,\beta$-monoethylenisch ungesättigten Monocarbonsäuren wie Ethylenglykoldiacrylat und Butandiol-1,4-diacrylat, Amide dieser ungesättigten Mono- und Dicarbonsäuren wie Acrylamid und Methacrylamid und deren N-Methylolverbindungen sowie N-Alkoxymethyl- und N-Acyl-(meth)acrylamide mit 1 bis 4 Kohlenstoffatomen in den Alkylgruppen, z.B. N-Methoxymethyl-(meth)acrylamid, N-n-Butoxymethyl-(meth)acrylamid und N-Acetoxymethyl-(meth)acrylamid, ferner vinylaromatische Verbindungen, bei denen die Vinylgruppe direkt an einen aus 6 bis 10 Kohlenstoffatomen bestehenden Kern gebunden ist, beispielsweise Styrol, substituierte Styrole, wie mono und dialkylsubstituierte Styrole, $\alpha$-Methylstyrol, 2,4-Divinylbenzol, halogensubstituierte Styrole und Vinylnaphthalin, Vinylester von Carbonsäuren mit 1 bis 18 Kohlenstoffatomen, insbesondere Vinylacetat und Vinylpropionat, Vinylchlorid und Vinylidenchlorid, Vinylether wie Vinylmethylether, Vinylketone wie Vinylethylketon und heterocyclische Monovinylverbindungen wie Vinylpyridin.

Die Methoden zur Herstellung feinteiliger Latices sind dem Fachmann bekannt und z.B. beschrieben in Houben-Weyl, Methoden der organischen Chemie, Band XIV/1, Georg Thieme Verlag, Stuttgart, 1961, S. 335 und 375 ff. Der Einstellung der Teilchendurchmesser auf 20 bis 150 nm kommt deshalb besondere Bedeutung zu, weil auf diese Weise eine ausreichende Penetration in das Leder gewährleistet wird.

Die Bestimmung der Teilchendurchmesser erfolgt üblicherweise durch Ermittlung der Teilchengrössenverteilung der Polymerdispersionen mit Hilfe der Elektronenmikroskopie, Ultrazentrifuge oder Gelchromatographie. Man erhält sog. Teilchengrössenverteilungskurven, indem man beispielsweise pro Volumeneinheit die Teilchen gleichen Durchmessers zählt, deren prozentuale Anteile an der Gesamtteilchenzahl ermittelt und diese Zahlenwerte gegen die entsprechenden Teilchendurchmesser aufträgt (differentielle Teilchengrössenverteilung).

Der $T\lambda_{max}$-Wert des Polymers, der unter 20 °C, vorzugsweise zwischen +5 und −15 °C liegen soll, wird an dem durch Verdampfen des Wassers erhaltenen Polymerisatfilm in einem Torsionsschwingungsversuch bestimmt (DIN 53 445) und dient zur Charakterisierung des Erweichungsbereichs des Polymerisats [vgl. auch I. Williamson, British Plastics 23, 87 (September, 1950)].

Die Herstellung der erfindungsgemäss verwendeten Copolymerisatdispersionen erfolgt nach bekannten Verfahren der Emulsionspolymerisation unter Verwendung von üblichen Initiatoren und Emulgatoren des anionogenen und/oder nichtionogenen Typs.

Die erfindungsgemäss zu verwendenden Latices zeigen infolge der Stabilisierung der Latexteilchen durch Sulfonatgruppen, die für eine ausreichende Ladung auf der Teilchenoberfläche sorgen, im Gegensatz zu Polymerteilchen, die durch Absorption von Emulgatormolekülen stabilisiert sind, eine wesentlich erhöhte Stabilität gegenüber Scherkräften. Im Vergleich zu emulgatorhaltigen, carboxylierten Nitrilkautschukdispersionen besitzen diese Binder bei pH-Werten zwischen 2 und 7 eine wesentlich erhöhte mechanische Stabilität. Dies wirkt sich beim Auftragen auf Leder durch Giessen, Plüschen oder Spritzen besonders günstig aus. Ferner wird durch den Einbau der stark polaren (Meth)allylsulfonsäure bzw. deren wasserlöslichen Salzen eine wesentlich verbesserte Haftung auf dem Leder erreicht und die i.a. ausgeprägte Vergilbungsneigung der aus Nitrilkautschuklatices erhaltenen Polymerfilme verringert. Die Haftfestigkeit wird durch die Copolymerisation von Hydroxyalkylestern der (Meth)acrylsäure noch verstärkt und ausserdem ein reversibles Wasseraufnahmevermögen erreicht.

Neben einer guten Verarbeitbarkeit zeichnen sich die Latices dadurch aus, dass ihre Filme einen trockenen Griff, gute Haftung auf Leder und eine gegenüber Filmen aus reinen Polyacrylatdispersionen wesentlich verbesserte Kältebruchfestigkeit aufweisen.

Die Verarbeitung kann auf vollnarbigen, geschliffenen und Spaltledern jeder Provenienz erfolgen. Es ist zweckmässig, die Gerbung der Leder bereits auf die nachfolgenden Zurichtungen abzustimmen. In der Regel wird der Narben leicht angeschliffen, um Narbenfehler zu korrigieren und die Haftung der Zurichtung zu verbessern. Nach Entfernung des Schleifstaubes erfolgen Imprägnierungs- und Grundierungsprozesse, um eine Narbenverfestigung zu erreichen, die Zwischenräume im Fasernetzwerk auszufüllen und die Oberfläche zu verschliessen. Die narbenverfestigende Imprägnierung wird i.a. mit den verdünnten erfindungsgemässen Polymerdispersionen, gegebenenfalls unter Verwendung von Penetrierhilfsmitteln, durchgeführt, während die Grundierungsflotte neben diesen Komponenten bereits eine wässrige Pigmentzubereitung enthält. Die Grundierungsaufträge werden meist mehrfach durchgeführt und zwischen den einzelnen Aufträgen gebügelt bzw. narbengeprägt. Nach dem Trocknen erfolgt die eigentliche Zurichtung (Finish).

Von besonderer Bedeutung für die Zurichtung ist neben der thermischen Vernetzbarkeit die Reaktionsfähigkeit der Binder mit geeigneten Reagentien, insbesondere mit Formaldehyd und anderen Aldehyden wie Glyoxal, sowie N-Methylolverbindungen wie Dimethylolharnstoff und Hexamethylolmelamin. Ferner lassen sich diese Polymerisate mit nieder- und höhermolekularen Di- und Polyepoxiden vernetzen sowie mit Di- und Polyisocyanaten, beispielsweise mit Toluylen-2,4-diisocyanat, Toluylen-2,6-diisocyanat, Naphthalin-1,5-diisocyanat, Diphenylmethan-4,4'-diisocyanat und polymeren Isocyanaten, die aus mehrwertigen Alkoholen durch Umsetzung mit einem Überschuss an Polyisocyanaten erhalten werden. Ferner kommen verkappte Isocyanate in Betracht, z.B. Umsetzungsprodukte aus Isocyanaten mit Phenolen, Malonestern und Acetessigester.

Aus diesem Grund sind die Latices auch hervorragend geeignet als Grundierungsbinder für Lackleder, die nach der Grundierung mit Reaktionslacken aus polyfunktionellen Isocyanaten und bewegliche Wasserstoffatome tragenden Verbindungen zugerichtet werden, wie beispielsweise Polyester und Polyether mit freien Hydroxylgruppen. Durch Umsetzung der Grundierung mit der anschliessend aufgebrachten Lackschicht erhält man hervorragende Haftungen bei mechanischer Beanspruchung, Einwirkung von Wasser und organischen Lösungsmitteln sowie hervorragende Knickfestigkeiten im trockenen wie im nassen Zustand und damit eine ausgezeichnete Pflegeleichtigkeit der Endartikel bei angenehmem Griff, gutem Abschluss und Narbenwurf. Diese Lackleder können beispielsweise als Schuhoberleder, Taschen-, Bekleidungs- und Feinleder dienen.

Die folgenden Beispiele erläutern den Erfindungsgegenstand. Die Prozentangaben sind stets Gew.-%.

1. Herstellung der Polymerdispersionen

Latex A (erfindungsgemäss)

In einem 40-l-Autoklav aus rostfreiem Stahl mit Kreuzbalkenrührer wird eine Mischung aus 300 g ethoxyliertem Isononylphenol mit 15 Ethylenoxideinheiten, 200 g eines Natriumsulfonats eines Gemisches langkettiger Paraffinkohlenwasserstoffe mit einer mittleren Kettenlänge von 15 Kohlenstoffatomen, 10 g Tetranatriumethylendiamintetraacetat, 25 g 1%iger Eisen(II)-sulfat-heptahydrat-Lösung und 50 g tert.-Dodecylmercaptan in 16 300 g Wasser vorgelegt und mit 1n-Schwefelsäure auf pH 3,0 eingestellt.

Anschliessend fügt man 200 g einer 25%igen wässrigen Lösung von Natriummethallylsulfonat, 2900 g Acrylnitril und 1500 g Propylenglykol-1-methacrylat hinzu, evakuiert, gleicht den Druck mit Stickstoff aus und drückt 5300 g Butadien-(1,3) auf. Nach Erwärmen auf 25°C wird die Polymerisation mit 20 g 80%igem tert.-Butylhydroperoxid in 100 g Acrylnitril und 10 g Natriumformaldehydsulfoxylatdihydrat in 500 g Wasser gestartet. Bei Feststoffkonzentrationen von 10, 20 und 30% wird jeweils eine Lösung von 200 g einer 25%igen wässrigen Lösung von Natriummethallylsulfonat, 150 g eines ethoxylierten Isononylphenols, 20 g des Natriumparaffinsulfonats und 3 g Natriumformaldehydsulfoxylat-dihydrat in 1000 g Wasser zugedrückt, und die Temperatur während der Polymerisation bis zum Erreichen einer Endkonzentration von 35,4% allmählich bis auf 40°C erhöht. Bei einer Feststoffkonzentration von 33% wird eine Nachaktivierung mit einer Lösung von 20 g Ammoniumperoxodisulfat in 100 g Wasser und 20 g Natriumdisulfit in 100 g Wasser vorgenommen. Nach Erreichen der Endkonzentration werden 200 g einer 50%igen phenolischen Alterungsschutzmittel-Emulsion zugegeben und die Dispersion bei 50°C i. Vak. von Restmonomeren befreit. Man erhält einen praktisch koagulat- und stippenfreien Latex mit einer Konzentration von 36,2% Feststoff, einem pH-Wert von 3,2 und einer Teilchendurchmesserverteilung, die etwa zwischen 90 und 130 nm liegt. Ein aus dem Latex hergestellter Polymerisatfilm zeigt im Torsionsschwingungsversuch (DIN 53 445) einen $T\lambda_{max}$-Wert von etwa +2°C (Frequenz: 1,6 Hz).

Vergleichslatex A

Entsprechend der Herstellung von Latex A wird ein Latex unter Austausch des Acrylnitrils gegen Methylmethacrylat hergestellt. Es entsteht ein koagulat- und stippenfreier Latex mit einem Feststoffgehalt von 34,8 % und einem pH-Wert von 2,8. Die Teilchendurchmesser liegen etwa zwischen 70 und 100 nm. Ein aus dem Latex hergestellter Polymerisatfilm hat einen $T\lambda_{max}$-Wert von ca. –11°C (Frequenz: 0,9 Hz).

Vergleichslatex B

Entsprechend der Herstellung von Latex A wird ein Latex unter Austausch des Natriummethallylsulfonats gegen Methacrylsäure hergestellt. Dabei entsteht ein stippenfreier Latex mit geringen Mengen an Ausscheidungen, von denen leicht abfiltriert werden kann. Der Feststoffgehalt beträgt 34,7%, der pH-Wert liegt bei 3,4. Die Teilchendurchmesser betragen etwa 60 bis 90 nm. Ein aus dem Latex hergestellter Polymerisatfilm hat einen $T\lambda_{max}$-Wert von ca. +4°C (Frequenz: 1,9 Hz).

Vergleichslatex C

Entsprechend der Herstellung von Latex A wird ein Latex unter Austausch des Propylenglykol-1-methacrylats gegen Methylmethacrylat hergestellt. Man erhält einen praktisch koagulat- und stippenfreien Latex mit einer Feststoffkonzentration von 25,5%, einem pH-Wert von 3,1 und einer Teilchendurchmesserverteilung zwischen etwa 50 und 90 nm. Ein aus dem Latex hergestellter Polymerisatfilm hat einen $T\lambda_{max}$-Wert von ca. +2°C (Frequenz: 2,0 Hz).

Vergleichslatex D

In einem 40-l-Reaktor aus rostfreiem Stahl mit Kreuzbalkenrührer werden 1000 g Ölsäure und 500 g Kaliumhydroxid in 14 500 g Wasser bei 80 °C gelöst und eine Lösung von 50 g der Natriumsalze von Kondensationsprodukten der 2-Naphthalinsulfonsäure mit Formaldehyd in 1500 g Wasser zugefügt. Nach Abkühlen auf 25 °C wird der Autoklav mit 3000 g Acrylnitril, 1500 g Propylenglykol-1-methacrylat, 800 g einer 25%igen wässrigen Lösung von Natriummethallylsulfonat und 50 g tert.-Dodecylmercaptan beschickt. Nach Evakuieren und Druckausgleich mit Stickstoff werden 5300 g Butadien-(1,3) aufgedrückt und die Polymerisation bei 25 °C mit Lösungen von 50 g Kaliumperoxodisulfat in 500 g Wasser initiiert. Während der Polymerisation wird die Temperatur allmählich bis auf 40 °C gesteigert und der pH-Wert durch Zugabe von 30 ml 25%iger Kalilauge stets oberhalb 9,0 gehalten. Nach Erreichen einer Konzentration von etwa 30% werden je eine Lösung von 40 g Kaliumperoxodisulfat in 800 g Wasser und 20 g Natriumdisulfit in 600 g Wasser sowie 250 g 20%iger Kalilauge zugegeben. Nach Erreichen einer Endkonzentration von 34,3% werden 200 g einer phenolischen Alterungsschutzmittel-Emulsion zugefügt und die Dispersion bei 50 °C im Vakuum von Restmonomeren befreit. Man erhält einen praktisch koagulat- und stippenfreien Latex mit einer Feststoffkonzentration von 36,4% und einem pH von 8,9. Die Teilchendurchmesser liegen zwischen etwa 40 und 80 nm. Ein aus dem Latex hergestellter Polymerisatfilm hat einen $T\lambda_{max}$-Wert von ca. −5 °C (Frequenz: 1,7 Hz).

## 2. Behandlung von Leder

Die vorstehend beschriebenen Polymerdispersionen werden zur Behandlung von Leder eingesetzt. Aus dem Vergleich ergeben sich die guten anwendungstechnischen Eigenschaften von Latex A.

### Beispiel 1

Auf Chromkalbleder wird durch Handauftrag eine Flotte folgender Zusammensetzung aufgebracht:

130 Gew.-Teile einer wässrigen Kasein-Deckfarbe
400 Gew.-Teile Wasser
160 Gew.-Teile Latex A.

Diese Flotte wird von Hand mittels eines Plüschbrettes in drei Aufträgen mit Zwischentrocknen auf das Leder aufgebracht. Nach dem ersten Auftrag wird das Leder bei einer Temperatur von 60 °C auf einer hydraulischen Presse gebügelt. Auf das so grundierte Leder wird durch Spritzauftrag ein Zweikomponenten-Polyurethanlack mit einem Feststoffgehalt von etwa 35%, gelöst in organischen Lösungsmitteln, aufgebracht.

Das in dieser Weise lackierte Leder wird in waagerechter Lage bei Temperaturen zwischen 20 und 40 °C bis 10 Stunden getrocknet. Es resultiert ein Polyurethan-Lack-leder mit guten Echt-heitseigenschaften. Bei der Knickfestigkeits-prüfung im Bally-Flexometer wird nach 50 000 Knickungen keine Rissbildung beobachtet. Auch die Haftfestigkeit des Polyurethan-Lackfilms auf der Grundierung erweist sich bei der Prüfung im trockenen und acetonfeuchten Zustand des Leders als einwandfrei.

### Vergleichsbeispiele

In Vergleichsversuchen werden gleiche Chromkalbleder in gleicher Weise wie in Beispiel 1 mit wässrigen Grundierungsflotten behandelt, in denen statt des Latex A die Vergleichslatices A, B und C eingesetzt werden. Die Lackierung und Trocknung der Leder erfolgt wie in Beispiel 1. Die erhaltenen Lackleder zeigen bei der Haftfestigkeitsprüfung im trockenen und acetonfeuchten Zustand der Leder eine ungenügende Haftfestigkeit zwischen der Grundierung und dem Polyurethan-lack, da sich die Lackschicht mit einem Messer abschälen lässt.

### Beispiel 2

Ein Chromrindleder, das mit synthetischen Gerbstoffen nachgegerbt und mit Schleifpapier leicht geschliffen ist, wird mit einer wässrigen Grundierung der nachstehend beschriebenen Zusammensetzung grundiert:

130 Gew.-Teile einer wässrigen Kasein-Deckfarbe, die als Pigment Titandioxid enthält,
150 Gew.-Teile Wasser,
160 Gew.-Teile Latex A.

Die Viskosität der Grundierungsflotte wird durch Verdünnen so eingestellt, dass die Flotte im Fordbecher mit einer Auslaufdüse von 4 mm Durchmesser eine Auslaufzeit von etwa 22 Sekunden besitzt.

Der Auftrag des Grundierungsansatzes auf das Leder erfolgt mittels einer Giessmaschine in einer Menge von 160 g/m² bzw. in zwei Aufträgen von jeweils 80 g/m². Nach dem Trocknen der Grundierung wird zur Verbesserung der Prägbarkeit ein leichter Spritzauftrag eines Lackes bzw. einer wässrigen Emulsion auf Nitrocellulosebasis aufgebracht. Danach wird das Leder auf einer hydraulischen Presse bei 70 °C mit einer Prägung versehen, z.B. mit einer Poren- oder Schrumpf-ledernarbung. Lackierung mit einem Zweikom-ponenten-Polyurethanlack sowie Trocknung der Lackierung erfolgen wie in Beispiel 1.

Das erhaltene Polyurethan-Lackleder zeichnet sich durch gute Echtheitseigenschaften, vor allem in der Knick- und Haftfestigkeit aus. Bei den mit Hitzeeinwirkung verbundenen Arbeitsgängen während der Schuhfertigung, z.B. Fönen und Bügeln, tritt keine Vergilbung ein.

### Beispiel 3 (Vergleichsbeispiel)

Ledermaterial, Arbeitsweise für Grundierung und Lackierung sind die gleichen wie in Beispiel 2. In dem dort beschriebenen Grundierungsansatz wird lediglich der Latex A durch den alkalischen Vergleichslatex D ersetzt. Die Echtheitswerte des erhaltenen Polyurethan-Lackleders (Knick- und Haftfestigkeit) sind ebenso gut wie in Beispiel 2. Jedoch tritt bei Hitzeeinwirkung während der Schuhfertigung Vergilbung ein, hervorgerufen durch einen teilweisen Abbau der Nitrocellulose-Zwischenschicht infolge der alkalischen Reaktion des Grundierungsbinders.

**Patentansprüche**

1.Verwendung von Polymerdispersionen mit einem pH-Wert zwischen 2 und 7 und Teilchendurchmessern zwischen 20 und 150 nm von Polymeren mit einem $T\lambda_{max}$-Wert unter 20 °C aus

A) 20 bis 70 Gew.-Teilen eines oder mehrerer acyclischer konjugierter Diene mit 4 bis 9 Kohlenstoffatomen,

B) 10 bis 40 Gew.-Teilen Acrylnitril und/oder Methacrylnitril,

C) 1 bis 5 Gew.-Teilen Allylsulfonsäure und/oder Methallylsulfonsäure oder deren wasserlöslichen Salzen,

D) 5 bis 15 Gew.-Teilen Acrylsäure- und/oder Methacrylsäurehydroxyalkylestern mit 2 bis 4 Kohlenstoffatomen im Hydroxyalkylrest und

E) 0 bis 40 Gew.-Teilen Acrylsäure- und/oder Methacrylsäurealkylestern mit bis zu 8 Kohlenstoffatomen im Alkylrest,

wobei bis zu 20 Gew.- Teile der Monomeren A, B, D und E durch andere copolymerisierbare Monomere ersetzt sein können, zur Behandlung von Leder.


**Claims**

1. Use of polymer dispersions having a pH value between 2 and 7 and particle diameters between 20 and 150 nm of polymers having a $T\lambda_{max}$ value below 20 °C of

A) 20 to 70 parts by weight of one or more acyclic conjugated dienes having 4 to 9 carbon atoms,

B) 10 to 40 parts by weight of acrylonitrile and/or methacrylonitrile,

C) 1 to 5 parts by weight of allylsulphonic acid and/or methallyl sulphonic acid or watersoluble salts thereof,

D) 5 to 15 parts by weight of acrylic and/or methacrylic acid hydroxyalkyl esters having 2 to 4 carbon atoms in the hydroxyalkyl radical and

E) 0 to 40 parts by weight of acrylic and/or methacrylic acid alkyl esters having up to 8 carbon atoms in the alkyl radical,

it being possible for 20 parts by weight of the monomers A, B, D and E to be replaced by other copolymerisable monomers, for the treatment of leather.


**Revendications**

1. Utilisation de dispersions polymères ayant un pH compris entre 2 et 7 et dont les particules ont un diamètre se situant entre 20 et 150 nm, ces dispersions étant constituées de polymères d'une valeur $T\lambda_{max}$ inférieure à 20 °C et formés à partir de:

A) 20 à 70 parties en poids d'un ou de plusieurs diènes acycliques conjugués contenant 4 à 9 atomes de carbone,

B) 10 à 40 parties en poids d'acrylonitrile et/ou de méthacrylonitrile,

C) 1 à 5 parties en poids d'acide allyl-sulfonique et/ou d'acide méthallyl-sulfonique ou leurs sels hydrosolubles,

D) 5 à 15 parties en poids d'esters hydroxyalkyliques d'acide acrylique et/ou d'acide méthacrylique dont le groupe hydroxyalkyle contient 2 à 4 atomes de carbone, et

E) 0 à 40 parties en poids d'esters alkyliques d'acide acrylique et/ou d'acide méthacrylique dont le groupe alkyle contient jusqu'à 8 atomes de carbone,

jusqu'à 20 parties en poids des monomères A, B, D et E pouvant être remplacés par d'autres monomères copolymérisables, pour le traitement du cuir.